(19) Europäisches Patentamt
European Patent Office
Office européen des brevets

(11) **EP 4 734 439 A1**

(12) **EUROPEAN PATENT APPLICATION**

(43) Date of publication:
**29.04.2026 Bulletin 2026/18**

(21) Application number: **24306794.9**

(22) Date of filing: **24.10.2024**

(51) International Patent Classification (IPC):
**H04L 9/30** (2006.01)    **H04L 9/32** (2006.01)
**H04L 9/00** (2022.01)

(52) Cooperative Patent Classification (CPC):
**H04L 9/3247; H04L 9/002; H04L 9/3093;**
H04L 2209/046

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **SCHNEIDER, Tobias**
**8010 Graz (AT)**
• **SCHOENAUER, Markus**
**1030 Vienna (AT)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire SO51 9NJ (GB)**

(54) **KEY ROTATION AS LIGHTEIGHT COUNTERMEASURE AGAINST PHYSICAL ATTACKS ON FALCON**

(57)    A method is proposed to improve the resistance of signature generation against physical attacks.

Fig. 1

## Description

### FIELD

The invention relates to a method and system. Particularly, but not exclusively, the invention relates to a computer-implemented method of generating a cryptographic signature for a message.

### BACKGROUND

Digital signatures are an ever-increasing method of providing secure associating between a signatory and data. Multiple digital signature schemes have been proposed in the art and some of the vulnerabilities associated with these schemes are physical attacks such as side channel attacks and active fault attacks.

Approaches to mitigating these attacks can often introduce significant performance overheads, especially in schemes such as, for example, the FALCON (Fast-Fourier Lattice-based Compact Signatures over NTRU) scheme [1]. These performance overheads can be problematic in computing devices, especially embedded devices or mobile computing devices which have limited computing resources.

Aspects and embodiments were conceived with the foregoing in mind.

### SUMMARY

Aspects relate to the generation of digital signatures such as, for example, cryptographic signatures for providing security around the content of data. Aspects may be used as part of a FALCON signature generation approach.

Viewed from a first aspect, there may be provided a computer-implemented method of generating a cryptographic signature for a message. A cryptographic signature may comprise data which can be used to verify content of a message. The message may comprise the content and a request for the signature to be generated for the content. The content may comprise an alphanumeric sequence. The method may be implemented by a processing resource. The processing resource may be hardware or software implemented. The processing resource may comprise one or more processing components which provide processing capacity. The processing resource may be a secure computing resource. The processing resource may be contained within a trusted execution environment. The trusted execution environment may be contained within an embedded computing device. The processing resource may be an embedded computing device. The method may comprise obtaining a message to be signed. The message may be provided as a part of a request for a signature to be generated and may comprise content which is the object of the signature. The method may comprise obtaining a key transformation parameter. The key transformation parameter may be generated deterministically or stochastically. In the deterministic case, the key transformation parameter may be any odd positive integer. In the stochastic case, the key transformation parameter may be any positive integer. The method may comprise obtaining a secret key, wherein the secret key is orthogonal to a public key. The secret key may be defined in the real or Fourier domain. The secret key may be described as a private key. The secret key may be obtained from storage which is local to the computing resource or storage which is remote to the computing resource. The secret key may be obtained from a computing device which is external to the processing resource. Obtaining the secret key may comprise using the processing resource to generate the secret key. The processing resource may comprise a secure computing element configured to generate the secret key. The orthogonality may be defined by the product of the secret key and the public key being equal to zero mod q, where q is an integer to be selected by a user or fixed by a selected signature generation scheme. The method may comprise transforming the secret key based on the key transformation parameter to generate a transformed secret key, wherein the transformation maintains the orthogonality of the secret key and the public key. That is, the transformation must maintain the orthogonality of the secret key relative to the public key. An example transformation is the application of a variable raised to an exponent where the exponent is equal to the key transformation parameter. The method may further comprise generating the cryptographic signature for the obtained message based on the transformed secret key.

A method in accordance with the first aspect improves the robustness of the signature generation process to side-channel attacks and fault attacks since it makes it very difficult to guess the secret key used to generate the signature based on physical measurements alone.

The cryptographic signature may be transmitted to an entity which requested the signature. The cryptographic signature may be transmitted by the processing resource to an entity which requested the signature. The transmission may comprise a signature data set which comprises a salt, the message and the generated cryptographic signature.

Optionally the secret key may be defined by the polynomials f, g, G and F where f, g, G and F satisfy the NTRU equation. The NTRU equation is defined in the FALCON standard and states that, where f, g, G and F are polynomials and f is an invertible element of $R_q = \frac{Z_q[x]}{\phi}$, where f, g, G and F must solve

$$fG - Fg = q \bmod \phi.$$

Where q is prime (it may be an integer defined within a signature generation scheme (e.g. FALCON)) and $\phi = x^n + 1$.

The prime number q may be defined by a user of the method in accordance with the first aspect. The power $n=2^\kappa$ where $\kappa$ is an integer.

Alternatively, $\phi$ may be any cyclotomic polynomial, i.e. a polynomial of the form $\phi = \prod_{\varsigma \in \Omega} (x - \xi)$ where $\Omega$ denotes the set of primitive m-th roots of unity for an integer m.

Generation of the secret key may comprise randomly generating f and g and then solving the NTRU equation to determine F and G which provide a solution to the NTRU equation.

The polynomials f, g, F and G may be stored by the processing resource or by a resource which may be accessed by the processing resource.

In practice, roots of $\phi$ may be hardcoded into the processing resource for use by any processor which is computing the signature.

Optionally, the transformation of the secret key may comprise:

applying a rotation to the secret key and the public key, wherein the rotation is based on the key transformation parameter;

obtaining a binary tree and a root of a binary tree;

applying the rotation to the root of the binary tree to generate a rotated binary tree and

providing the rotated binary tree and the rotated secret key as the transformed secret key.

A Falcon tree may be defined as follows:

A Falcon tree is a binary tree of height m, where the root node contains a polynomial in Q[x]/(x'' + 1) with n = 2$^\kappa$. The left and right children of the root are Falcon trees of height m-1.

Optionally, the application of the rotation may comprise multiplying the secret key and the public key by a factor raised to an exponent, wherein the exponent is equal to the key transformation parameter.

Optionally, the secret key and/or the public key may be in the Fourier domain.

Optionally, the message may be received by the processing resource or obtained from storage.

Optionally, the public key and secret key are defined by polynomials. Optionally, the public key and the secret key may be defined by vectors of polynomial coefficients.

Optionally, at least one of the polynomials is an element of the ring $R_q = \dfrac{Z_q[x]}{\phi}$, where $Z_q$ is the ring of integers mod q.

Optionally, the secret key may be defined by the matrix:

$$B = \begin{pmatrix} g & -f \\ G & -F \end{pmatrix}$$

Where g, f, F, G are polynomials in the set of real valued polynomials in the field $R = \dfrac{Z[x]}{\phi}$, where Z is the ring of integers and satisfy the NTRU equation $fG - gF = q \bmod \phi$ which is described above.

Optionally, the public key may be defined by the matrix:

$$A = \begin{pmatrix} 1 \\ h \end{pmatrix}$$

Where h is a polynomial in $R_q$

Optionally, generating the cryptographic signature for the obtained message based on the transformed secret key comprises one or more of the following:

obtaining the transformed secret key;

generating a random seed parameter;
generating a hash parameter, wherein the hash parameter is generated based on the random seed parameter and the message
generating a pre-image of the hash parameter;
generate a bit string based on the pre-image of the hash parameter; or
provide the cryptographic signature as the bit-string and the random seed parameter.

Non-transitory computer readable storage media, systems and processing resources may also be provided which are configured to provide a method in accordance with the first aspect.

## DESCRIPTION

An embodiment will now be described by way of example only and with reference to the following drawings in which:

Figure 1 illustrates a series of steps which implement the generation of a signature in accordance with an embodiment;

Figure 2 illustrates a processing resource which may be used to implement the generation of a signature in accordance with the embodiment; and

Figure 3 illustrates a series of steps which may be used to implement the generation of a signature in accordance with the embodiment.

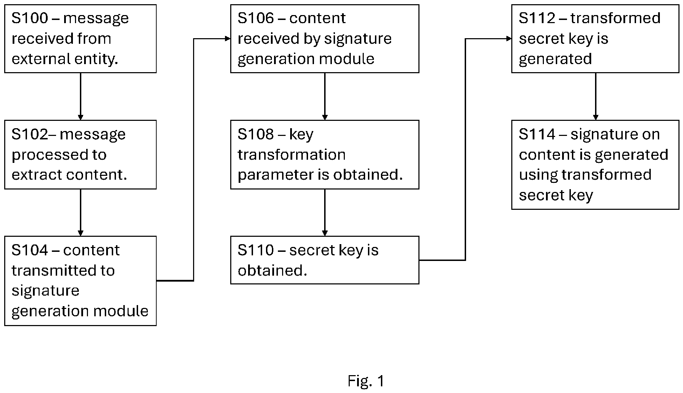

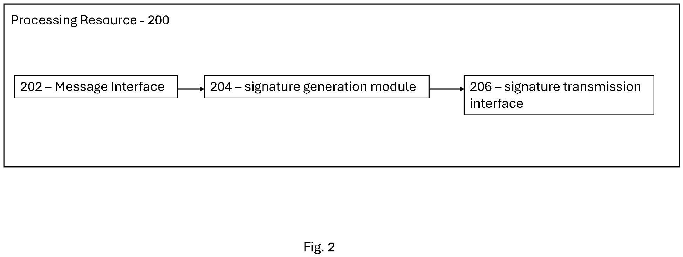

We now describe, with reference to Figures 1, 2 and 3, how a processing resource 200 can be used to generate a cryptographic signature. The FALCON signature generation scheme is used as an example of a signature generation approach which could be enhanced by use of the described processing resource 200 but this should be taken to be a merely illustrative example and not limiting.

Processing resource 200 may be implemented using any suitably configured processing elements (e.g., processors, registers, etc.) and may be hardware or software implemented. Processing resource 200 may be cloud implemented. Processing resource 200 comprises a message interface 202, a signature generation module 204 and a signature transmission interface 206. The message interface 202, signature generation module 204 and the signature transmission interface 206 may be co-located in the same place or may be distributed remotely relative to one another.

Data may be transmitted between the respective message interface 202, the signature generation module 204 and the signature transmission interface 206 using any suitable data transmission protocol or medium.

Processing resource 200 may be implemented inside or as part of a trusted execution environment (TEE) and/or inside an embedded device. Each of the message interface 202, signature generation module 204 and the signature transmission interface 208 may be configured to access any needed data or files from local storage or from storage located in the cloud or on hardware located remotely relative to the processing resource 200. Alternatively or optionally, the signature generation module 204 may be a standalone component as a part of the processing resource 200 and configured to communicate with a remotely located message interface 202 and a remotely located signature transmission interface 206.

In a step S100, message interface 202 receives a message from an entity external to the processing resource 200 and a request for a cryptographic signature associated with the message to be generated. The request may come from a computing device which hosts the processing resource 200 or is in communication with the processing resource 200. The message may comprise an alphanumeric sequence over which the cryptographic signature is required. The message may comprise a file containing content which is to be verified based on the cryptographic signature.

In a step S102, the message interface 202 processes the message to extract the content which is to form the basis of the cryptographic signature. We will enumerate this content as m for its use later in this description.

In a step S104, the message interface 202 transmits the content m to the signature generation module 204 with a request for the cryptographic signature to be generated.

In a step S106, the content m is received by the signature generation module 204 with the request provided in step S104.

In a step S108, a key transformation parameter k is obtained by the signature generation module 204. The key transformation parameter may be obtained from local or remote storage. The signature generation module 204 may be configured to generate the key transformation parameter using a deterministic or stochastic (otherwise known as random) process. The signature generation module 104 may be configured to use both modes, i.e. deterministic and stochastic key transformation parameter generation, interchangeably in that it may switch between them either responsive to instruction from a user or even without instruction from a user.

In the deterministic case, the key transformation parameter is selected sequentially from the set of odd positive integers. That is, the first time around, the key transformation parameter is 1, the second time around, the key transformation parameter is 3 and so on and so forth. The position in the sequence of odd positive integers may be determined using a flag in storage which sets out that the previous odd positive integer is 3 (and so the next one should be 5) etc. Where the key transformation parameter is applied to the secret key and public key, as described below, it means the entire space of odd positive integers is traversed without requiring a source of randomness.

In the stochastic case, the key transformation parameter is selected randomly from the set of positive integers. The random generation may be based on random integer generator which identifies which odd positive integer is to be used. A flag may store the previous key transformation parameter and be used to ensure the same odd positive integer is not used on consecutive occasions.

In step S110, a secret key ($\hat{B}$, T) is obtained from storage by the signature generation module 204. Using the example of FALCON, the secret key is defined by the matrix $\hat{B}$ and a FALCON tree T.

The matrix $\hat{B}$ is defined below:

$$\hat{B} = \begin{bmatrix} \hat{g} & -\hat{f} \\ \hat{G} & -\hat{F} \end{bmatrix}$$

where $\hat{g}, \hat{f}, \hat{F},$ and $\hat{G}$ are Fourier transforms of polynomials g, f, G and F. It makes sense to consider the generation of the transformed secret key in the Fourier domain as many calculations around Falcon signature generation are performed in the Fourier domain.

Alternatively or additionally, the signature generation module 204 may generate g, f, G and F. Signature generation module 204 may generate g, f, G and F if a completely new secret key (and corresponding public key) need to be generated prior to the transformation operation which is applied by the signature generation module 204.

In this instance, the routine NTRUSolve may be deployed (NTRUSolve is set out in the FALCON specifications). The polynomials f and g may be generated by generating a random set of coefficients and the polynomials F and G may be obtained recursively. Alternatively, *NTRUGen*($\phi$, *q*), which is also set out in the FALCON specification, may be used to generate f, g, F and G where $\phi$ is a monic polynomial (e.g. $x^n + 1$ as described below), and q is a modulus.

The Fourier transforms of f, g, G and F may then be obtained and then the Fourier transform applied to produce the Fourier transform of the respective polynomials. This would give $\hat{B}$, i.e. the Fourier transform of matrix B.

We can define the Fourier transform (FFT) of a polynomial p by the equation:

FFT($p$) = ($p(\zeta)$)$_{\zeta \in N_\phi}$ with $N_\phi$ = { exp ($i(2\ell n+1)\pi$) : $0 \leq \ell < n$},

Additionally, the polynomial f must be invertible as an element of the ring:

$$R_q = \frac{Z_q[x]}{\phi}$$

where $Z_q[x]$ is the ring of polynomials with coefficients that are integers mod q (where q is prime, e.g. equal to 12289)

The matrix $\hat{B}'$ can then be determined by the signature generation module 204 as:

$$\widehat{B}' = \begin{bmatrix} \widehat{g}.\zeta^k & -\widehat{f}.\zeta^k \\ \widehat{G}.\zeta^{-k} & -\widehat{F}.\zeta^{-k} \end{bmatrix}$$

Where k is the key transformation parameter. The matrix $\hat{B}'$, i.e. which corresponds to the transformed secret key (where the transformation, for example, is the application of a rotation using a factor defined by $\zeta^k$ where k is the key transformation parameter) is the Fourier transform of the matrix:

$$\mathbf{B}' = \begin{bmatrix} gx^k & -fx^k \\ \hline Gx^{-k} & -Fx^{-k} \end{bmatrix}$$

As, where f is a polynomial, the Fourier transform provides the following representation:

$$\mathsf{FFT}(fx^k) = \mathsf{FFT}(f) \odot \mathsf{FFT}(x^k) = (\hat{f}_\zeta \cdot \zeta^k)_{\zeta \in N_\phi}.$$

That is to say, the transformation based on k can be applied either in the Fourier domain or in the real domain to create a transformed secret key B' (or its Fourier equivalent $\hat{B}'$)

More generally, f, G, g and F also satisfy the equation

$$fG - Fg = q \bmod \phi$$

Where q is a prime number and $\phi = x^n + 1$ where $n \in \{512, 1024\}$.

In summary, the matrix B may be obtained from storage (either in real or Fourier representation) and then a transformation may be applied by the signature generation module 204 to provide a transformed matrix (either in the real or Fourier domain).

Alternatively or additionally, the Fourier transforms of respective polynomials f, g, F and G are calculated and the key transformation parameter is applied as an exponent of Fourier variable $\zeta$ as described above to arrive at the matrix $\hat{B}$ (or equivalently in the real domain as an exponent of x).

That is to say, the signature generation module 204 determines a transformed secret key matrix using the key transformation parameter k.

The Falcon tree T can be obtained using the ffLDL* routine set out in the Falcon standard. This is shown in Algorithm 1 below. A FALCON tree T as calculated using algorithm 1 below is an example of a binary tree. Although we talk in terms of a FALCON tree T, it will be understood that this is just an example and that the transformations can be applied to other binary trees. The root node of the FALCON tree contains a polynomial from $Q[x]/\phi$ in the FFT representation

---

**Algorithm 1** ffLDL*(**G**)

---

**Require:** A full-rank Gram matrix $\mathbf{G} \in \text{FFT}(\mathbb{Q}[x]/(x^n + 1))^{2 \times 2}$

**Ensure:** A Falcon tree T

1: $\mathbf{L} \leftarrow \begin{bmatrix} 1 & 0 \\ G_{10}/G_{00} & 1 \end{bmatrix}, \quad \mathbf{D} \leftarrow \begin{bmatrix} G_{00} & 0 \\ 0 & G_{11} - L_{10}L_{10}^{*}G_{00} \end{bmatrix}$

2: $\mathsf{T.value} \leftarrow L_{10}$

3: **if** n = 2 **then**

4:     $\mathsf{T.leftchild} \leftarrow D_{00}$

5:     $\mathsf{T.rightchild} \leftarrow D_{11}$

6:     **return** T

7: **else**

8:     $d_{00}, d_{01} \leftarrow \mathsf{splitfft}(D_{00})$

9:     $d_{10}, d_{11} \leftarrow \mathsf{splitfft}(D_{11})$

10:     $\mathbf{G}_0 \leftarrow \begin{bmatrix} d_{00} & d_{01} \\ d_{01}^{*} & d_{00} \end{bmatrix}, \quad \mathbf{G}_1 \leftarrow \begin{bmatrix} d_{10} & d_{11} \\ d_{11}^{*} & d_{10} \end{bmatrix}$

11:     $\mathsf{T.leftchild} \leftarrow \text{ffLDL}^{*}(\mathbf{G}_0)$

12:     $\mathsf{T.rightchild} \leftarrow \text{ffLDL}^{*}(\mathbf{G}_1)$

13:     **return** T

---

The calculation of the Falcon tree T, performed by the signature generation module 204 using Algorithm 1, requires matrix G as input, where G is defined below:

$$\mathbf{G}' = \hat{\mathbf{B}}' \cdot (\hat{\mathbf{B}}')^{*} = \begin{bmatrix} \hat{g}\hat{g}^{*} + \hat{f}\hat{f}^{*} & \zeta^{2k}(\hat{g}\hat{G}^{*} + \hat{f}\hat{F}^{*}) \\ \zeta^{-2k}(\hat{g}^{*}\hat{G} + \hat{f}^{*}\hat{F}) & \hat{G}\hat{G}^{*} + \hat{F}\hat{F}^{*} \end{bmatrix} = \begin{bmatrix} G_{00} & \zeta^{2k} \cdot G_{01} \\ \zeta^{-2k} \cdot G_{10} & G_{11} \end{bmatrix},$$

The matrix $(\hat{B})^{*}$ is the matrix of complex conjugates of the components of $\hat{B}$.

The output provides a Falcon tree T which can be used as part of the secret key. The signature generation module 204 then applies the key transformation parameter k to the root node (only) of the Falcon tree T to provide T', i.e. a transformed Falcon tree. This is lines 6 and 7 of the routine described below as part of the KeyRandomizer routine (the routine providing guideline pseudocode for the generation of the transformed secret key):

---

**Algorithm 2** KeyRandomizer($\hat{\mathbf{B}}$, T, $k$)

---

**Require:** A Falcon secret key $(\hat{\mathbf{B}}, \mathbf{T})$ and a rotation parameter $k$

**Ensure:** A secret key $\mathbf{sk}' = (\hat{\mathbf{B}}', \mathbf{T}')$ rotated by $k$ steps

  1: $\hat{f}' \leftarrow (\hat{f}_\zeta \cdot \zeta^k)_{\zeta \in N_\phi}$               ▷ Rotating the key polynomials

  2: $\hat{g}' \leftarrow (\hat{g}_\zeta \cdot \zeta^k)_{\zeta \in N_\phi}$

  3: $\hat{F}' \leftarrow (\hat{F}_\zeta \cdot \zeta^{-k})_{\zeta \in N_\phi}$

  4: $\hat{G}' \leftarrow (\hat{G}_\zeta \cdot \zeta^{-k})_{\zeta \in N_\phi}$

  5: $\hat{\mathbf{B}}' \leftarrow \begin{bmatrix} \hat{g}' & -\hat{f}' \\ \hat{G}' & -\hat{F}' \end{bmatrix}$             ▷ Rotated secret matrix

  6: $\hat{p} \leftarrow$ T.root

  7: $\hat{p}' \leftarrow (\hat{p}_\zeta \cdot \zeta^{-2k})_{\zeta \in N_\phi}$          ▷ Rotating the tree root node

  8: $\mathbf{T}' \leftarrow (\hat{p}', \text{T.leftchild}, \text{T.rightchild})$  ▷ Copying all other nodes unchanged

  9: $\mathbf{sk}' \leftarrow (\hat{\mathbf{B}}', \mathbf{T}')$

10: **return** $\mathbf{sk}'$

---

The matrix $\hat{B}'$ and the transformed Falcon tree T' is then provided as output as a transformed secret key (sk'). This is step S112. The multiplication of $\hat{p}_\zeta$ by the factor $\zeta^{-2k}$ is described as the application of a rotation of the tree root node in the Fourier domain using the key transformation factor k. In the real domain it would simply correspond to p multiplied by $x^k$

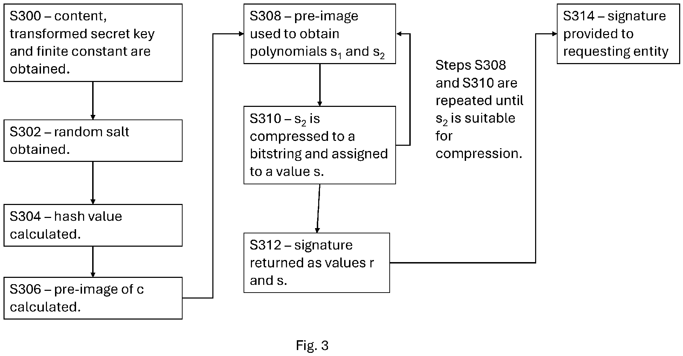

In step S114, the transformed secret key can be used by the signature generation module 104 to generate a signature on the content m, which we will now describe with reference to Figure 3. The signature generation module is also summarized by the image of algorithm 3 below.

In a step S300, the content m is retrieved from memory or storage and the transformed secret key provided by step S112 is also retrieved from memory or storage (which may be local storage or remote storage). A finite constant β is also retrieved from memory or storage.

In a step S302, a random salt r is obtained using the uniform distribution between 0 and 1, using a sample size of (n=320).

In a step S304, a hash value is calculated using a concatenation of the random salt with the content m (i.e. the content to be signed) using the following equation:

$$c = HashToPoint(r||m, q, n)$$

where $|q| \leq 2^{16}$ and n is a positive non-zero natural number. This routine (i.e. HashtoPoint) is defined in the Falcon standard. The positive non-zero natural number n may be equal to 512 or 1024 depending on the security level.

In a step S306, a pre-image t (of c) is calculated using Fast Fourier Transform of c, q, the fast Fourier transform of the polynomial F' (i.e. the rotated version of F) and the fast Fourier transform of the polynomial f' (i.e. the rotated version of f) as defined respectively in lines 1 and 3 of Algorithm 2 above.

In a step S308, the pre-image t is used with the transformed Falcon tree T' as an input to the Fast Fourier Transform sampling algorithm (assigned to the value z) to return a Fourier transform s (based on the pre-image t, the result of the fast fourier transform sampling algorithm (i.e. z) and the matrix $\hat{B}'$). This sampling is repeated whilst the absolute square value of s is greater than the floor of $\lfloor \beta^2 \rfloor$. The output s is then used as an input to the inverse Fast Fourier Transform (invFFT) to return an output in the form of two polynomials $s_1$ and $s_2$ which are polynomials in $R = \frac{Z[x]}{\phi}$.

In a step S310, s2 is compressed to a bitstring s.

Steps S308 and S310 are repeated until s is not empty. That it, it is possible that $s_2$ is not suitable for compression. This will mean the compression in step S310 will yield an empty value and s will not be assigned a value, i.e. it will be empty. That is to say, steps S308 and S310 are repeated until a suitable value for $s_2$ is provided to the compression operation in step S310.. The polynomial $s_2$ may be unsuitable for compression if the coefficients are too large. This will lead to the compressed representation becoming longer than the prescribed maximum length of the encoding and returning an empty output.

Following the completion of the iteration of steps S308 and S310 , the signature of content m is returned as a vector of components r and s. This is step S312.

The signature over content m is then provided as output by the signature generation module 204. That is to say, the signature is generated using the transformed secret key which is generated in step S112.

In a step S314, the signature (as a vector r and s) can be provided to the entity who requested the signature in step S100. The content (or more broadly the message) can also be provided with the signature. This may mean that the signature transmission interface 206 obtains the signature output by the signature generation module 204 and sends it to the entity which requested it using any suitable transmission protocol or media. The entity may be another component in a computing device which hosts the processing resource 200.

---

**Algorithm 3** SignWithRandomizedKey$(m, sk, \lfloor \beta^2 \rfloor)$

---

**Require:** A message m, a FALCON secret key $(\hat{B}, T)$, a bound $\lfloor \beta^2 \rfloor$
**Ensure:** A signature sig of m
1:  $k \leftarrow [0, \ldots, 2n-1]$        $\triangleright$ Randomly sample a rotation parameter
2:  $(\hat{B}', T') \leftarrow$ KeyRandomizer$(\hat{B}, T, k)$        $\triangleright$ Rotate secret key
3:  $r \leftarrow \{0, 1\}^{320}$
4:  $c \leftarrow$ HashToPoint$(r\|m, q, n)$
5:  $t \leftarrow \left( -\frac{1}{q}\mathsf{FFT}(c) \odot \mathsf{FFT}(F'), \frac{1}{q}\mathsf{FFT}(c) \odot \mathsf{FFT}(f') \right)$
6:  **do**
7:      **do**
8:          $z \leftarrow$ ffSampling$_n(t, T')$
9:          $s \leftarrow (t - z)\hat{B}'$
10:      **while** $\|s\|^2 > \lfloor \beta^2 \rfloor$
11:      $(s_1, s_2) \leftarrow$ invFFT$(s)$
12:      $s \leftarrow$ Compress$(s_2, 8 \cdot$ sbytelen $- 328)$
13: **while** $s = \perp$
14: **return** sig $= (r, s)$

---

We can illustrate the impact of the use of Steps S300 to S314 using numerical examples below. If we consider original versions of f, g, F and G below (as 4$^{th}$ degree polynomials):

$$f_{\mathrm{orig}} = \begin{bmatrix} -7, -59, -40, -48 \end{bmatrix},$$

$$g_{\mathrm{orig}} = \begin{bmatrix} 64, -22, 21, -46 \end{bmatrix},$$

$$F_{\mathrm{orig}} = \begin{bmatrix} -28, -37, 36, -90 \end{bmatrix},$$

$$G_{\mathrm{orig}} = \begin{bmatrix} 33, 37, 45, 46 \end{bmatrix}.$$

If we set the key transformation parameter k=1, we obtain the following rotated versions of f, g, F and G using the rotation operation set out below:

$$f_{\mathrm{rot}} = \begin{bmatrix} 48, -7, -59, -40 \end{bmatrix},$$

$$g_{\mathrm{rot}} = \begin{bmatrix} 46, 64, -22, 21 \end{bmatrix},$$

$$F_{\mathrm{rot}} = \begin{bmatrix} -37, 36, -90, 28 \end{bmatrix},$$

$$G_{\mathrm{rot}} = \begin{bmatrix} 37, 45, 46, -33 \end{bmatrix}.$$

We use a message m = b'HelloWorld!', then salt r can be generated:

```
r =c0c8d56f0aed56288cff
   965bd00276c903a69915
   83c108c5ec6384410c52
   dcba6ef65bd418a5be41,
```

We can generate a random seed (b' 1337 ') and then hash the message to a point to provide:

$$c = \begin{bmatrix} 11307, 7748, 10681, 2748 \end{bmatrix}$$

The signatures based on the original and rotated values are then:

$$\mathbf{s}_{\mathrm{orig}} = \begin{bmatrix} [48, -262, -220, 12], [31, 51, -100, -18] \end{bmatrix},$$

$$\mathbf{s}_{\mathrm{rot}} = \begin{bmatrix} [-59, -89, -219, -166], [116, -8, 145, 156] \end{bmatrix}$$

That is to say, the signatures are distinct from one another, i.e. the application of the key transformation operation, even with k=1, generates a different signature.
This signature can be verified using the public key:

$$h = \begin{bmatrix} 2424, 2293, 4343, 2144 \end{bmatrix}.$$

More generally, the transformation of the secret key needs to maintain the relationship between the secret key and the public key. The application of the transformation described above using the key transformation parameter k does maintain the relationship between the secret key and the public key. We now illustrate why the relationship between the transformed secret key and the public key is maintained.
Firstly, we remind ourselves of the definition of the secret key using the matrix B:

$$B = \begin{bmatrix} g & -f \\ G & -F \end{bmatrix}$$

The polynomials $f, g, F, G \in R$ that satisfy, among other properties, the following:

- $f$ is invertible as an element of $R_q$.
- All four polynomials satisfy the NTRU-equation: $fG - Fg = q \bmod \phi$.

The public key is a single polynomial $h \in R_q$ that is computed as $h = f^{-1}g \bmod \phi \bmod q$. Since $f$ is required to be invertible, $h$ is always well-defined. Depending on the context, the public key can also be written as a matrix:

$$A = \begin{bmatrix} 1 \\ h \end{bmatrix}$$

where 1 denotes the constant polynomial and where:

$$R_q = \frac{Z_q[x]}{\phi}$$

Where $Z_q[x]$ is the ring of polynomials (with integer coefficients) mod q (where q is prime) and:

$$\phi = x^n + 1$$

Considering the application of a factor $x^k$, wherein k is the key transformation parameter, to the secret key B, we obtain the rotated secret key B':

$$\mathbf{B'} = \left[ \begin{array}{c|c} gx^k & -fx^k \\ \hline Gx^{-k} & -Fx^{-k} \end{array} \right]$$

The application of the factor $x^k$ could be described as the application of a rotation with an exponent k (i..e the key transformation parameter) and this is an example of a key transformation which could be applied to a secret key using the key transformation parameter k.

B' is the real-domain version (i.e. the inverse Fourier transform) of $\hat{B}'$ and so the verifiability of B' can be shown without considering the Fourier transform of A.

In accordance with the Falcon standard, signature verification relies on the fact that the secret and public key are orthogonal, in the sense that the product of **B** and **A** is zero mod q. We can check that, indeed, **B'** satisfies the same relation:

$$\mathbf{B'A} = \left[ \begin{array}{c|c} gx^k & -fx^k \\ \hline Gx^{-k} & -Fx^{-k} \end{array} \right] \cdot \left[ \begin{array}{c} 1 \\ h \end{array} \right] = \left[ \begin{array}{c} x^k \cdot (g - f^{-1}gf) \\ x^{-k} \cdot (G - f^{-1}gF) \end{array} \right].$$

The upper entry resolves easily to $g - f^{-1}gf = g - g = 0$, while the lower entry equals $q$ due to the NTRU-equation. In any case, we get (0, 0) mod $q$. Therefore, the signature generated with the rotated secret key can be verified with the original public key. Even if provided with the Fourier transform of B', then the inverse Fast Fourier transform may be used to return B' (i.e. in the real domain) and the above equation can be verified due to the uniqueness of Fourier transforms.

Verification of the signature generated in step S312 may be performed using the content over which the signature is generated (which we more generally described as the message above), the signature generated in step S312 (i.e. the components r and s), the public key A which corresponds to the transformed secret key B' and a bound constant $\beta$. The parameter $\beta$ needs to be equal to the parameter $\beta$ used in signature generation. That is to say, the entity generating the signature and the verifier need to agree on a value of $\beta$. A value for $\beta$ is set in the FALCON specification but a different value can be used.

Firstly, the value c(calculated in step S304) is re-calculated based on the concatenation of r with the message (i.e. the content over which the signature is generated), the value q and the polynomial degree n.

Secondly, s is decoded (decompressed) to a polynomial $s_2 \in Z[x]/\phi$ as defined in the Falcon standard.

Thirdly, the value $s_1 = c - s_2h \ mod \ q$ is determined.

If $\|(s_1, s_2)\| \leq \lfloor \beta^2 \rfloor$ then the signature is accepted as valid and is verified. Otherwise, it is rejected.

In summary, a verifiable signature is generated using a transformed secret key. The example above illustrates that, provided the transform maintains the orthogonality between the transformed secret key and the original public key (i.e. the one which corresponded to the original secret key) the transformed secret key can still be used to generate signatures which can be verified with the same public key A. This applies whether the secret key is provided in the real or the Fourier domain.

In the example where the described embodiment is applied to FALCON signature generation, alternative secret keys are generated by use of a key transformation parameter to apply a transformation (e.g. a rotation) to the secret key to generate a transformed secret key, which is then used to generate the signature over the provided content. The transformation is chosen so that the algebraic relationship (e.g. orthogonality) between the transformed secret key and the public key is maintained. This means that, the transformation applied to the secret key does not change its relationship with the public key. That is, each transformed secret key retains the same public key. This increases the resistance of FALCON against physical attacks whilst only introducing a negligible overhead in runtime, randomness and memory.

Generating a cryptographic signature in the fashion described provides benefits in terms of the resistance to side channel and fault attacks.

The resistance to side channel attacks is improved as the variation provided by the use of the key transformation parameter to transform the key increases during the signature generation process, as it leads to entirely different sampled values being generated (see the numerical example above). If the key transformation parameter k is randomly generated, the randomness increases as the signature generation process continues. Specifically, with regard to side channel attacks, an adversary takes physical measurements which depend on the secret key. They may then apply statistical analysis to retrieve the secret key. As we do not fix the secret key, each measurement provides different information about a different secret key. The attacker does not know which measurement was produced from which of the 2n equivalent secret keys (equivalent as each produces signatures which can be verified using the same public key) and so it is measurably more difficult to analyse the data generated using the signature generation process.

Similarly, regarding fault attacks, they are generally reliant on the assumption that all gathered data was produced from a fixed secret key. Our transformed secret key would make it much more difficult to retrieve a secret key as this assumption cannot apply.

The embodiment described can be used in combination with other countermeasures to create the best cost×performance trade-off, e.g., by reducing the masking order by 1. Regarding masked implementations, the embodiment can also be applied to those implementations. It is sufficient to apply the signature generation module 204 to each share of the masked key separately, but with the same $k$. The same holds true for generic fault countermeasures as well. For example, when re-computing the signing operation for fault protection, it is only necessary to ensure that both iterations use the same rotated key.

Overall, the embodiment described provides a signature generation approach which provides increased resistance to the effects of physical attacks such as side channel attacks and active fault attacks. These attacks can be used to recover information about the secret key used in signature generation.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

Reference

[1] Thomas Prest; Pierre-Alain Fouque; Jeffrey Hoffstein; Paul Kirchner; Vadim Lyubashevsky; Thomas Pornin; Thomas Picosset; Gregor Seiler; William Whyte; Zhenfei Zhang, https://falcon-sign.info/falcon.pdf

**Claims**

1. A computer-implemented method of generating a cryptographic signature for a message, the method implemented by a processing resource, the method comprising:

   obtaining a message to be signed;
   obtaining a key transformation parameter;
   obtaining a secret key, wherein the secret key is orthogonal to a public key;
   transforming the secret key based on the key transformation parameter to generate a transformed secret key, wherein the transformation maintains the orthogonality of the secret key and the public key;
   generating the cryptographic signature for the obtained message based on the transformed secret key.

2. A method according to Claim 1, wherein the cryptographic signature is transmitted to an entity which requested the signature.

3. A method according to Claim 1, wherein the key transformation parameter is obtained deterministically

4. A method according to Claim 1, wherein the key transformation parameter is obtained using a stochastic process

5. A method according to Claim 2 or Claim 3, wherein the key transformation parameter is obtained from the set of integers

6. A method according to any preceding claim, wherein the transformation of the secret key comprises:

   applying a rotation to the secret key and the public key, wherein the rotation is based on the key transformation parameter;
   obtaining a binary tree and a root of a binary tree;
   applying the rotation to the root of the binary tree to generate a rotated binary tree; and

providing the rotated binary tree and the rotated secret key as the transformed secret key.

7. A method according to any preceding claim, wherein the message comprises an alphanumeric sequence of characters.

8. A method according to any preceding claim, wherein the public key and secret key are defined by polynomials.

9. A method according to any preceding claim, wherein at least one of the polynomials is an element of the ring $R_q = \frac{Z_q[x]}{\phi}$ , where $Z_q$ is the ring of integers mod q.

10. A method according to any preceding claim wherein the secret key is defined by the matrix:

$$B = \begin{pmatrix} g & -f \\ G & -F \end{pmatrix}$$

Where g, f, F, G are polynomials in the set of real valued polynomials in the field $R = \frac{Z[x]}{\phi}$ , where Z is the ring of integers and satisfy the NTRU equation *fG - gF = q mod $\phi$* which is described above and wherein $\phi = x^n + 1$ and Z[x] is the ring of polynomials with integer coefficients

11. A method according to any preceding claim, wherein the public key is defined by the matrix:

$$A = \begin{pmatrix} 1 \\ h \end{pmatrix}$$

Where h is a polynomial in $R_q$

12. A method according to any preceding claim, wherein the generating the cryptographic signature for the obtained message based on the transformed secret key comprises:

> obtaining the transformed secret key;
> generating a random seed parameter;
> generating a hash parameter, wherein the hash parameter is generated based on the random seed parameter and the message
> generating a pre-image of the hash parameter;
> generate a bit string based on the pre-image of the hash parameter;
> provide the cryptographic signature as the bit-string and the random seed parameter.

13. A non-transitory computer readable storage medium having stored thereon executable instructions that, as a result of being executed by a processor of a computer system, cause the computer system to at least perform the method of any one of claims 1 to 12.

14. A system configured to implement the method of Claims 1 to 12.

15. A processing resource comprising a processor and memory including executable instructions that, as a result of execution by the processor, causes the reader to perform the method of Claims 1 to 12.

S100 – message received from external entity.

S102– message processed to extract content.

S104 – content transmitted to signature generation module

S106 – content received by signature generation module

S108 – key transformation parameter is obtained.

S110 – secret key is obtained.

S112 – transformed secret key is generated

S114 – signature on content is generated using transformed secret key

Fig. 1

Processing Resource - 200

| 202 – Message Interface | → | 204 – signature generation module | → | 206 – signature transmission interface |

Fig. 2

S300 – content, transformed secret key and finite constant are obtained.

S302 – random salt obtained.

S304 – hash value calculated.

S306 – pre-image of c calculated.

S308 – pre-image used to obtain polynomials $s_1$ and $s_2$

S310 – $s_2$ is compressed to a bitstring and assigned to a value s.

S312 – signature returned as values r and s.

Steps S308 and S310 are repeated until $s_2$ is suitable for compression.

S314 – signature provided to requesting entity

Fig. 3

**Europäisches Patentamt**
**European Patent Office**
**Office européen des brevets**

# EUROPEAN SEARCH REPORT

**Application Number**

EP 24 30 6794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG AN ET AL: "Random key rotation: Side-channel countermeasure of NTRU cryptosystem for resource-limited devices", COMPUTERS & ELECTRICAL ENGINEERING, vol. 63, 1 January 2017 (2017-01-01), pages 220-231, XP085274566, ISSN: 0045-7906, DOI: 10.1016/J.COMPELECENG.2017.05.007 | 1-5, 7-11, 13-15 | INV. H04L9/30 H04L9/32 H04L9/00 |
| Y | * sections 1 and 3 * | 6,12 | |
| X | CN 106 961 331 A (BEIJING INSTITUTE TECH) 18 July 2017 (2017-07-18) | 1-5, 7-11, 13-15 | |
| Y | * paragraphs [0001], [0038] - [0052] * | 6,12 | |
| T | Fouque Pierre-Alain ET AL: "Falcon: Fast-Fourier Lattice-based Compact Signatures over NTRU Specification v1.2 -01/10/2020", , 1 October 2020 (2020-10-01), pages 1-67, XP093248106, Retrieved from the Internet: URL:https://falcon-sign.info/falcon.pdf * sections 2.3 and 3.7 to 3.9 * | 6,12 | |

**TECHNICAL FIELDS SEARCHED (IPC)**

H04L

The present search report has been drawn up for all claims

| Place of search | Date of completion of the search | Examiner |
|---|---|---|
| Munich | 8 April 2025 | Manet, Pascal |

EPO FORM 1503 03.82 (P04C01)

## ANNEX TO THE EUROPEAN SEARCH REPORT
## ON EUROPEAN PATENT APPLICATION NO.

EP 24 30 6794

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| CN 106961331 A | 18-07-2017 | NONE | |